# FASCICULE DE BREVET EUROPEEN

(11) **EP 0 706 929 B1**
(45) Date de publication et mention de la délivrance du brevet: **17.12.1997**
(21) Numéro de dépôt: 95402041.8
(22) Date de dépôt: 08.09.1995
(51) Int. Cl.: B62D 1/10, F16D 1/08

(54) **Dispositif de fixation d'un moyeu de volant de direction de véhicule automobile sur un arbre de direction**
Vorrichtung zur Befestigung einer Lenkradnabe eines Kraftfahrzeuges an einer Lenksäule
Device for connecting a motor vehicle steering wheel hub on a steering column

(30) Priorité: 14.09.1994 FR 9410977
(43) Date de publication de la demande: 17.04.1996
(73) Titulaire: ECIA - EQUIPEMENTS ET COMPOSANTS POUR L'INDUSTRIE AUTOMOBILE, F-25400 Audincourt (FR)
(72) Inventeur: Hoblingre, André, F-25700 Valentigney (FR); Heranney, Yves, F-25200 Montbéliard (FR); Charbon, Antoine, F-25200 Montbeliard (FR)
(74) Mandataire: Habasque, Etienne Joel Jean-François

(56) Documents cités:
- EP-A- 0 501 149
- DE-U- 9 407 807

## Description

La présente invention concerne un dispositif de fixation d'un moyeu de volant de direction de véhicule automobile sur un arbre de direction.

On connaît déjà dans l'état de la technique, des dispositifs de fixation de ce type, dans lesquels le moyeu du volant comporte un évidement axial adapté pour recevoir une extrémité correspondante de l'arbre, ce moyeu et cet arbre comportant des moyens complémentaires d'immobilisation en rotation du volant sur l'arbre et des moyens à butée axiale et à vis-écrou de blocage axial du volant sur l'arbre.

En régle générale, les moyens complémentaires d'immobilisation en rotation comprennent des cannelures complémentaires du moyeu et de l'arbre, tandis que les moyens à butée axiale comprennent des parties tronconiques complémentaires de ces deux éléments et que les moyens à vis-écrou comprennent une portion filetée d'extrémité de l'arbre faisant saillie au-delà du moyeu et sur laquelle est vissé l'écrou pour permettre le blocage en position axiale de l'organe sur l'arbre.

Le but de l'invention est de proposer une autre solution pour la fixation de ce type de moyeu sur l'arbre de direction, qui ne nécessite pas d'avoir accès à l'extrémité de l'arbre et qui présente un encombrement axial réduit par rapport à celui des dispositifs de l'état de la technique.

A cet effet, l'invention a pour objet un dispositif de fixation d'un moyeu de volant de direction de véhicule automobile sur un arbre de direction, le moyeu comportant un évidement axial adapté pour recevoir une extrémité correspondante de l'arbre, et le moyeu et l'arbre comportant des moyens complémentaires d'immobilisation en rotation et en position axiale, caractérisé en ce que le moyeu comporte un évidement transversal dont au moins une partie débouche dans l'évidement axial du moyeu en regard d'une gorge périphérique de l'arbre, cet évidement étant adapté pour recevoir un organe de serrage comportant une portion en forme de coin adaptée pour faire saillie dans l'évidement axial du moyeu et pour venir en appui sur l'arbre dans la gorge de celui-ci, afin de serrer l'arbre dans le moyeu et immobiliser celui-ci en position axiale sur l'arbre.

L'invention sera mieux comprise à la lecture de la description qui va suivre, donnée uniquement à titre d'exemple et faite en se référant aux dessins annexés, sur lesquels :

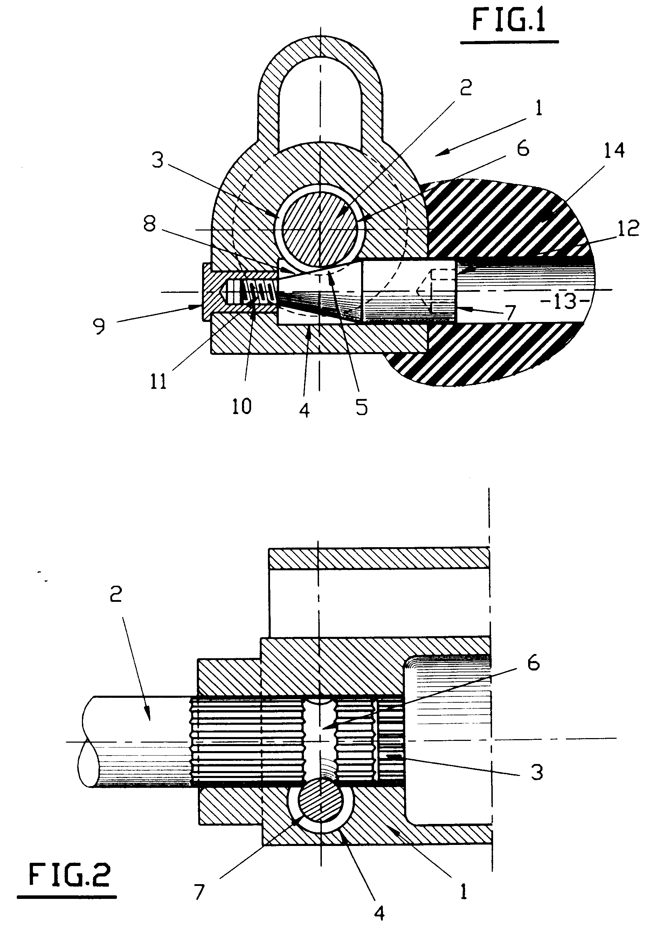

- la Fig.1 représente une vue de dessus en coupe d'un dispositif de fixation selon l'invention; et
- la Fig.2 représente une vue de côté en coupe d'un dispositif de fixation selon l'invention.

On reconnaît sur ces figures, un dispositif de fixation d'un moyeu de volant de direction désigné par la référence générale 1 sur ces figures, sur un arbre de direction désigné par la référence générale 2.

Le moyeu comporte un évidement axial 3 adapté pour recevoir une extrémité correspondante de l'arbre et le moyeu et l'arbre comprennent des moyens complémentaires d'immobilisation en rotation et en position axiale.

Dans l'exemple de réalisation représenté sur ces figures, ces moyens complémentaires d'immobilisation en rotation du moyeu du volant sur l'arbre, sont constitués par des parties en saillie et en creux complémentaires des surfaces de ces éléments en regard l'une de l'autre.

Avantageusement, ces parties en saillie et en creux complémentaires sont formées par des cannelures de l'arbre et du moyeu.

Par ailleurs, le moyeu comporte également un évidement transversal désigné par la référence générale 4 sur ces figures, dont au moins une partie 5 débouche dans l'évidement axial 3 du moyeu en regard d'une gorge périphérique 6 de l'arbre. Cet évidement transversal 4 est adapté pour recevoir un organe de serrage 7 comportant une portion en forme de coin 8 adaptée pour faire saillie dans l'évidement axial 3 du moyeu et pour venir en appui sur l'arbre de direction 2, dans la gorge périphérique 6 de celui-ci, afin de serrer l'arbre dans le moyeu et immobiliser celui-ci en position axiale sur l'arbre.

Avantageusement, l'évidement transversal 4 du moyeu 1 traverse celui-ci de part en part et débouche latéralement dans sa partie intermédiaire, dans l'évidement axial 3 de celui-ci.

Un insert 9 comportant un trou taraudé 10 est prévu à l'une des extrémités de cet évidement, tandis que l'organe de serrage 7 est introduit dans cet évidement par l'autre extrémité.

Cet organe de serrage 7 comporte en avant de la portion en forme de coin 8, une portion filetée 11 adaptée pour coopérer avec le trou taraudé 10 de l'insert 9 afin de permettre un serrage de cet organe 7 en position, par l'intermédiaire par exemple d'un outil, engageable par un utilisateur dans une empreinte 12 ménagée à l'autre extrémité de cet organe de serrage 7.

Dans l'exemple de réalisation représenté sur ces figures, la portion en forme de coin 8 de l'organe de serrage 7 est formée par une portion tronconique de celui-ci.

On conçoit alors que lors du serrage de cet organe, cette portion en forme de coin vient en appui contre l'arbre, dans la gorge périphérique de celui-ci, afin de serrer cet arbre dans le moyeu et d'immobiliser axialement, le moyeu et donc le volant, sur l'arbre.

L'accès à l'extrémité correspondante de cet organe de serrage 7 peut être obtenu par exemple par l'intermédiaire d'une lumière 13 ménagée dans le garnissage 14 du volant.

On conçoit alors que la structure de ce dispositif de fixation présente un encombrement axial extrêmement réduit et permet la fixation du moyeu du volant sur l'arbre de direction sans avoir accès à l'extrémité de l'arbre de direction.

Il va de soi bien entendu que d'autres modes de réalisation de ce dispositif peuvent être envisagés.

C'est ainsi par exemple que l'organe de serrage peut également se présenter sous la forme d'une vis comportant un corps fileté adapté pour coopérer avec une portion taraudée correspondante de l'évidement transversal du moyeu, ce corps comportant à l'une de ses extrémités une portion de forme de coin et à l'une ou l'autre de ses extrémités, une empreinte adaptée pour coopérer avec un outil de serrage.

Des moyens de freinage de la rotation de cet organe de serrage, peuvent également être prévus dans le filetage de cet organe ou le taraudage correspondant du moyeu pour garantir la fiabilité du serrage.

Il va de soi bien entendu que bien que ceci ne soit pas représenté sur les figures, l'arbre et le moyeu peuvent comporter des portions tronconiques complémentaires formant butées axiales comme dans l'état de la technique pour garantir la position axiale du moyeu sur l'arbre.

A cet égard, on notera également que l'arbre peut être muni de moyens de détrompage se présentant par exemple sous la forme d'une portion cylindrique d'extrémité de celui-ci, et présentant un diamètre supérieur à celui du fond de la gorge périphérique de l'arbre, pour empêcher l'engagement complet de l'organe de serrage dans l'évidement transversal du moyeu tant que les cannelures complémentaires de ce moyeu et de l'arbre ne sont pas suffisamment en prise les unes avec les autres afin de garantir la fixation du moyeu sur l'arbre.

Ceci présente un certain nombre d'avantages notamment pour éviter toute fausse position de fixation du moyeu sur l'arbre.

Enfin, on notera également que l'organe de serrage peut, avant montage, être maintenu en position escamotée dans la lumière 13 du garnissage 14 du volant, par exemple par des crans de celui-ci, le volant étant livré dans cet état chez un constructeur de véhicules automobiles, pour faciliter le montage de celui-ci sur l'arbre.

## Revendications

1. Dispositif de fixation d'un moyeu de volant de direction de véhicule automobile sur un arbre de direction, le moyeu (1) comportant un évidement axial (3) adapté pour recevoir une extrémité correspondante de l'arbre (2), et le moyeu et l'arbre comportant des moyens complémentaires d'immobilisation en rotation et en position axiale, caractérisé en ce que le moyeu comporte un évidement transversal (4) dont au moins une partie (5) débouche dans l'évidement axial (3) du moyeu en regard d'une gorge périphérique (6) de l'arbre (2), cet évidement étant adapté pour recevoir un organe de serrage (7) comportant une portion en forme de coin (8) adaptée pour faire saillie dans l'évidement axial (3) du moyeu (1) et pour venir en appui sur l'arbre dans la gorge (6) de celui-ci, afin de serrer l'arbre dans le moyeu et immobiliser celui-ci en position axiale sur l'arbre.

2. Dispositif selon la revendication 1, caractérisé en ce que les moyens d'immobilisation en rotation du moyeu et de l'arbre comprennent des cannelures complémentaires des surfaces en regard de ceux-ci.

3. Dispositif selon l'une quelconque des revendications précédentes, caractérisé en ce que l'évidement transversal (4) du moyeu (1) traverse celui-ci de part en part et en ce que l'une des extrémités de cet évidement (4) comporte un insert (9) muni d'un trou taraudé (10) adapté pour coopérer avec une portion filetée (11) de l'organe de serrage (7) pour permettre le serrage de l'arbre dans le moyeu.

4. Dispositif selon la revendication 1 ou 2, caractérisé en ce que l'organe de serrage (7) comporte un corps fileté adapté pour coopérer avec une portion taraudée de l'évidement transversal (4) du moyeu et à l'une de ses extrémités, la portion en forme de coin (8).

5. Dispositif selon l'une quelconque des revendications précédentes, caractérisé en ce que l'arbre (2) comporte des moyens de détrompage, empêchant l'introduction complète de l'organe de serrage dans l'évidement transversal (4) du moyeu tant que les moyens d'immobilisation en rotation du moyeu et de l'arbre ne sont pas suffisamment en prise.

6. Dispositif selon la revendication 5, caractérisé en ce que les moyens de détrompage comprennent une portion cylindrique d'extrémité de l'arbre, de diamètre supérieur au diamètre du fond de la gorge périphérique de l'arbre.

## Claims

1. Device for fixing a motor vehicle steering wheel hub on a steering column, the hub (1) comprising an axial recess (3) adapted to receive a corresponding end of the column (2) and the hub and the column comprising complementary means for immobilisation in rotation and in an axial position, characterised in that the hub comprises a transverse recess (4) whereof at least one part (5) opens into the axial recess (3) of the hub opposite a peripheral groove (6) of the column (2), this recess being adapted to receive a clamping member (7) comprising a wedge-shaped portion (8) adapted to project into the axial recess (3) of the hub (1) and to bear on the column in the groove (6) of the latter, in order to clamp the column in the hub and immobilise the latter in the axial position on the column.

2. Device according to Claim 1, characterised in that the means for immobilising the hub and the column in rotation comprise complementary splines on the facing surfaces of the latter.

3. Device according to one of the preceding Claims, characterised in that the transverse recess (4) of the hub (1) passes through the latter from one side to the other and in that one of the ends of this recess (4) comprises an insert (9) provided with a tapped hole (10) adapted to cooperate with a threaded portion (11) of the clamping member (7) to allow the clamping of the column in the hub.

4. Device according to Claim 1 or 2, characterised in that the clamping member (7) comprises a threaded body adapted to cooperate with a tapped portion of the transverse recess (4) of the hub and at one of its ends, the wedge-shaped portion (8).

5. Device according to any one of the preceding Claims, characterised in that the column (2) comprises safe-guarding means preventing the complete introduction of the clamping member into the transverse recess (4) of the hub as long as the means for immobilising the hub and the column in rotation are not sufficiently engaged.

6. Device according to Claim 5, characterised in that the safe-guarding means comprise a cylindrical end portion of the column, of diameter greater than the diameter of the base of the peripheral groove of the column.

## Patentansprüche

1. Vorrichtung zur Befestigung einer Lenkradnabe eines Kraftfahrzeugs an einer Lenksäule, wobei die Nabe (1) eine axiale Aussparung (3) umfaßt, die derart ausgeführt ist, um ein entsprechendes Ende der Säule (2) aufzunehmen, wobei die Nabe und die Säule komplementäre Mittel zur Feststellung in der Drehung und in der Axialposition umfassen, dadurch gekennzeichnet, daß die Nahe eine quergerichtete Aussparung (4) umfaßt, von der mindestens ein Teil (5) in die axiale Aussparung (3) der Nabe gegenüber einer Umfangsnut (6) der Säule (2) mündet, wobei diese Aussparung derart ausgeführt ist, um ein Klemmelement (7) aufzunehmen, bestehend aus einem Abschnitt in Form eines Keils (8), der derart ausgeführt ist, um in der axialen Aussparung (3) der Nahe (1) vorzuspringen und auf der Säule in der Nut (6) derselben zur Anlage zu kommen, um die Säule in der Nabe festzuklemmen und diese in axialer Position auf der Säule festzustellen.

2. Vorrichtung nach Anspruch 1, dadurch gekennzeichnet, daß die Mittel zur Feststellung der Nahe und der Säule in der Drehung Rillen umfassen, die zu den ihnen gegenüberliegenden Flächen komplementär sind.

3. Vorrichtung nach einem der vorhergehenden Ansprüche, dadurch gekennzeichnet, daß die querliegende Aussparung (4) der Nabe (1) durch diese hindurchgeht und daß eines der Enden dieser Aussparung (4) einen Einsatz (9), der mit einem Gewindeloch (10) versehen ist, umfaßt, das derart ausgeführt ist, um mit einem mit Gewinde versehenen Abschnitt (11) des Klemmelements (7) zusammenzuwirken, um das Festklemmen der Säule in der Nabe zu ermöglichen.

4. Vorrichtung nach Anspruch 1 oder 2, dadurch gekennzeichnet, daß das Klemmelement (7) einen mit Gewinde versehenen Körper umfaßt, der derart ausgeführt ist, um mit einem Gewindeabschnitt der querliegenden Aussparung (4) der Nabe und an einem seiner Enden mit dem Abschnitt in Form eines Keils (8) zusammenzuwirken.

5. Vorrichtung nach einem dar vorhergehenden Ansprüche, dadurch gekennzeichnet, daß die Säule (2) Unverwechselbarkeitsmittel umfaßt, die die völlige Einführung des Klemmelements in die querliegende Aussparung (4) der Nahe verhindern, solange die Mittel zur Feststellung der Nabe und der Säule bei der Drehung nicht genügend greifen.

6. Vorrichtung nach Anspruch 5, dadurch gekennzeichnet, daß die Unverwechselbarkeitsmittel einen zylindrischen Säulenendabschnitt mit einem größeren Durchmesser als der Durchmesser des Bodens der Umfangsnut der Säule umfassen.
